# EUROPÄISCHE PATENTSCHRIFT

(11) **EP 0 438 617 B1**
(45) Veröffentlichungstag und Bekanntmachung des Hinweises auf die Patenterteilung: **08.06.1994**
(21) Anmeldenummer: 90101336.7
(22) Anmeldetag: 23.01.1990
(51) Int. Cl.: H02K 5/24

(54) **Elektrische Maschine**
Electrical machine
Machine électrique

(43) Veröffentlichungstag der Anmeldung: 31.07.1991
(73) Patentinhaber: SIEMENS AKTIENGESELLSCHAFT, 80333 München (DE)
(72) Erfinder: Breunig, Peter, Dipl.-Ing. (grad.), D-8501 Veitsbronn (DE); Schwirzer, Thomas, Dr.-Ing., D-1000 Berlin (DE)

(56) Entgegenhaltungen:
- AT-B- 325 137
- DE-C- 618 043
- DE-C- 816 113
- US-A- 1 798 846

## Beschreibung

Die Erfindung betrifft eine elektrische Maschine gemäß Oberbegriff des Anspruchs 1.

Eine solche Maschine ist durch die US-A-1 798 846 bekannt. Bei dieser Maschine sind die Füße als federnde, in Längsrichtung jedoch starre Elemente ausgebildet. Die Lagerung der Maschine ist damit in allen Richtungen quer zur Längsachse starr, so daß unzulässige Querverschiebungen des Wellenzapfens durch Riemenzug oder durch Getriebe vermieden werden. Durch die federnde Ausbildung der Füße werden nur die von den Änderungen des Drehmoments der Maschine verursachten Vibrationen nicht zum Unterbau übertragen, wodurch auch eine Geräuschdämpfung erreicht wird.

Ferner ist durch die DE-C-618 043 eine elektrische Maschine bekannt, bei der zur Geräuschdämpfung an den vier Ecken eines rahmenartigen, die Maschine tragenden Fußgestelles gebogene Blattfedern zwischen dem Fußgestell und dem Aufstellboden für die Maschine angeordnet sind. Die Blattfedern sind parallel zur Motorachse ausgerichtet.

Bei elektrischen Maschinen und hier insbesondere bei zweipoligen Drehstrommaschinen bereitet es Schwierigkeiten, das Zusammentreffen von Läufer- und/oder Gehäuse-Eigenfrequenzen mit den anregenden Kräften der einfachen und doppelten Drehfrequenz bzw. der einfachen und doppelten Ständer-Speisefrequenz zu vermeiden. Selbst bei relativ kleinen anregenden Kräften können sich infolge der Resonanz mit Eigenfrequenzen unzulässig große Lager- und Gehäuseschwingungen ergeben.

Besonders kritisch sind in dieser Hinsicht wälzgelagerte Maschinen, da diese nicht mit überkritischen Läufern ausgeführt werden können und die Wälzlager nur eine sehr geringe Dämpfungswirkung haben. Bei diesen Maschinen müssen der Läufer und seine Lagerung derart starr ausgeführt sein, daß die erste kritische Drehzahl des Läufers im Betriebszustand ausreichend hoch über der höchsten Betriebsdrehzahl liegt.

Die aus den vorgenannten Gründen notwendige hohe Steifigkeit der Lagerung macht diese Maschinen wiederum empfindlich gegen Elastizitäten im Unterbau und/oder Montagefehler. Bei nicht ausreichend starrer Befestigung der Maschinenfüße oder zu geringer Steifigkeit des Unterbaus kann die erste kritische Drehzahl soweit absinken, daß es zu Resonanzen kommt.

Resonanzgefahr besteht ferner im Hinblick auf die elektromagnetischen Anregungen durch das Luftspaltfeld. Die Frequenz dieser anregenden Kräfte entspricht der einfachen und doppelten Frequenz der Ständerspeisespannung. Bei Maschinen mit einer Achshöhe über 300 mm liegen die Translations- und Kipp-Eigenfrequenzen im Bereich um 100 bis 120 Hz und sind stark abhängig von der Steifigkeit der Maschinenaufstellung und der Fundamentierung. Im Resonanzfall hat man die Aufstellbedingungen entsprechend geändert, was oft sehr aufwendig und teuer war. Da die Aufstellbedingungen häufig nicht genau bekannt sind, konnte nicht von vornherein dem Auftreten von Resonanzfällen entgegengewirkt werden.

Der Erfindung liegt die Aufgabe zugrunde, eine elektrische Maschine so zu gestalten, daß es unabhängig von den Aufstellverhältnissen zu keinen Resonanzen zwischen den Eigenfrequenzen der betreffenden Maschine und anregenden Kräften kommt.

Die Lösung der gestellten Aufgabe gelingt nach der Erfindung dadurch, daß die Füße der Maschine in vertikaler und horizontaler Richtung derart federnd ausgebildet sind, daß die Translations- und Kipp-Eigenfrequenz sowohl des Läufers als auch des Ständers in einem zur Vermeidung von Resonanzen erforderlichen Abstand zu auftretenden Anregungsfrequenzen liegen. Bei einer solchen Gestaltung der Maschine wird der Einfluß von Gegebenheiten des Aufstellortes auf die Eigenfrequenzen der Maschine weitgehend ausgeschaltet. Damit besteht die Möglichkeit, durch eine entsprechende Auslegung der Füße den erforderlichen Abstand zwischen den Eigenfrequenzen der Maschine und den Frequenzen der ebenfalls der Maschine inne wohnenden Anregungskräften einzuhalten.

Vorteilhafte Ausgestaltungen der Maschine werden in den Unteransprüchen beschrieben. Eine von der konstruktiven Ausbildung her einfache Maschine ergibt sich nach den Merkmalen des Anspruches 2. Die Verwendung von Zwischenkörpern gemäß Anspruch 3 erleichtert die Befestigung der Füße sowohl am Ständergehäuse als auch auf dem zur Aufstellung der Maschine bestimmten Unterbau. Durch die Merkmale der Ansprüche 4 und 5 wird eine Amplitudenbegrenzung der Schwingungen der Maschine erreicht.

Anhand eines in der Zeichnung dargestellten Ausführungsbeispieles wird der Anmeldungsgegenstand näher beschrieben. Es zeigt:
- FIG 1: eine elektrische Maschine in Seitenansicht,
- FIG 2: die gleiche Maschine in Stirnansicht.

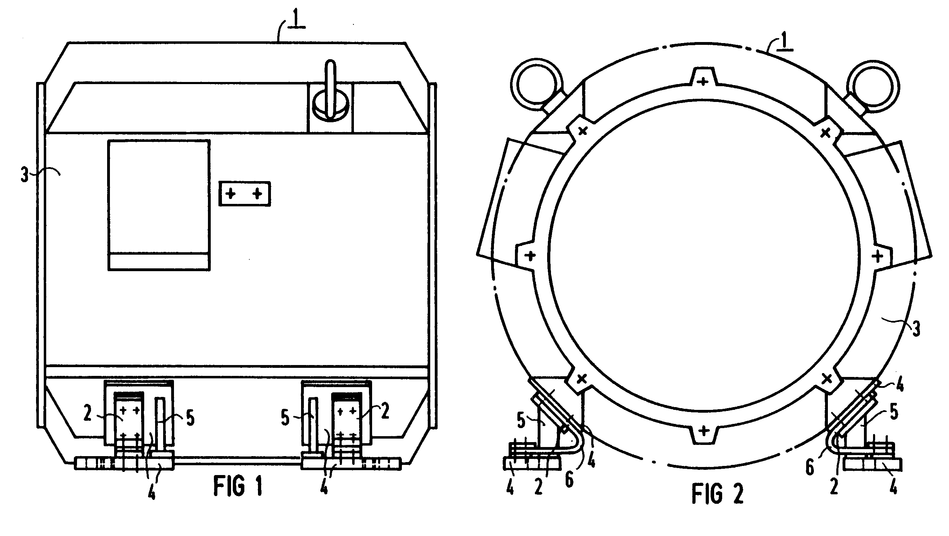

Bei einer mit 1 bezeichneten elektrischen Maschine sind auf jeder Längsseite in axialem Abstand jeweils zwei Füße 2 mit dem Ständergehäuse 3 verbunden. Wie aus der Stirnansicht nach FIG 2 erkennbar, sind die Füße 2 V-förmig ausgebildet und die jeweils auf der einen Längsseite angeordneten Füße 2 weisen mit ihrer V-Spitze 6 auf die jeweils auf der anderen Längsseite angeordneten Füße 2 zu. Die Füße 2 erhalten durch die V-Form eine federnde Eigenschaft. Durch entsprechende Bemessung der Materialdicke der V-Schenkel und deren sich in Achsrichtung der Maschine erstreckende Breite kann der zur Vermeidung von Resonanzen erforderliche Abstand zwischen den Eigenfrequenzen der Maschine und den auftretenden Kräften erreicht werden.

Die Füße 2 sind jeweils mit ihrem einen V-Schenkel über einen Zwischenkörper 4 mit dem Ständergehäuse 3 verbunden. Die Verbindung des anderen V-Schenkels mit dem Fundament am Einsatzort der Maschine erfolgt ebenfalls über einen Zwischenkörper 4. Durch die Verwendung solcher Zwischenkörper 4 kommen die entsprechenden Befestigungsschrauben außerhalb des Raumes zwischen den V-Schenkeln zu liegen und sind daher besser zugänglich.

Bei jedem Fuß 2 ist an einem der Zwischenkörper 4 eine mit diesem verbundene, zu dem anderen Zwischenkörper 4 weisende Anschlagleiste 5 vorgesehen. Die Anschlagleiste 5 endet in einem vorbestimmten Abstand vor dem anderen Zwischenkörper 4. Damit werden auftretende Schwingungen der Maschine in ihrer Amplitude begrenzt.

Aufgrund der Ausbildung der Füße 2 werden die Translations-und Kipp-Eigenfrequenz der Gesamtmaschine und des Ständers in den Bereich unterhalb der anregenden Frequenzen verschoben. Gleichzeitig steigen die Läufer-Eigenfrequenzen an, so daß auch die Gefahr von Läuferresonanzen geringer wird. Durch die Elastizität der Füße 2 wird das Gesamtsystem außerdem unempfindlicher gegen Elastizitäten im Maschinenunterbau und ungünstige Aufstellbedingungen.

## Patentansprüche

1. Elektrische Maschine, bei der an beiden Längsseiten des Ständergehäuses (3) der Befestigung der Maschine (1) auf einem Unterbau dienende, als gesonderte Bauteile und als federnde Elemente ausgeführte Füße (2) vorgesehen sind,
**dadurch gekennzeichnet**,
daß die Füße (2) der Maschine (1) in vertikaler und horizontaler Richtung derart federnd ausgebildet sind, daß die Translations- und Kipp-Eigenfrequenzen sowohl des Läufers als auch des Ständers (3) in einem zur Vermeidung von Resonanzen erforderlichen Abstand zu auftretenden Anregungsfrequenzen liegen.

2. Elektrische Maschine nach Anspruch 1,
**dadurch gekennzeichnet**,
daß die Füße (2) V-förmig ausgebildet und mit ihren V-Spitzen (6) zur senkrechten Mittelebene der Maschine (1) weisend am Ständergehäuse (3) angeordnet sind.

3. Elektrische Maschine nach Anspruch 1 oder 2,
**dadurch gekennzeichnet**,
daß die Füße (2) mittels Zwischenkörper (4) sowohl am Ständergehäuse (3) als auch am Unterbau befestigt sind.

4. Elektrische Maschine nach Anspruch 1,2 oder 3,
**dadurch gekennzeichnet**,
daß Anschlagmittel (5) zur Begrenzung der vertikalen Durchfederstrecke vorgesehen sind.

5. Elektrische Maschine nach Anspruch 3 und 4,
**dadurch gekennzeichnet**,
daß jeweils an einem der zu einem Fuß (2) gehörenden Zwischenkörper (4) eine zum anderen Zwischenkörper (4) weisende Anschlagleiste (5) vorgesehen ist.

6. Elektrische Maschine nach einem der Ansprüche 1 bis 4,
**dadurch gekennzeichnet**,
daß die Maschine (1) als zweipolige Drehstrommaschine ausgebildet ist.

## Claims

1. Electric machine in which feet (2) are provided on the two longitudinal sides of the stator frame (3), which feet (2) serve to secure the machine (1) to a base and are designed as separate components and as spring elements, characterised in that the feet (2) of the machine (1) are constructed resilient in the vertical and horizontal direction in such a way that the translation natural frequency and tilting natural frequency of the rotor and the stator (3) are at a distance from the excitation frequencies which occur, this distance being sufficient for the avoidance of resonances.

2. Electric machine according to claim 1, characterised in that the feet (2) are V-shaped and are arranged on the stator frame (3) with their V-tips (6) pointing towards the vertical median plane of the machine (1).

3. Electric machine according to claim 1 or 2, characterised in that the feet (2) are secured by means of intermediate elements (4) to both the stator frame (3) and the base.

4. Electric machine according to claim 1, 2 or 3, characterised in that stopping devices (5) are provided for limiting the vertical spring action path.

5. Electric machine according to claims 3 and 4, characterised in that, on one of the intermediate bodies (4) associated with a foot (2), there is provided a respective abutment strip (5) which points towards the other intermediate body (4).

6. Electric machine according to claims 1 to 4, characterised in that the machine (1) is constructed as a bipolar three-phase machine.

## Revendications

1. Machine électrique, dans laquelle sur les deux côtés longitudinaux du carter (3) du stator sont prévus des pieds (2) destinés à fixer la machine (1) à une fondation et réalisés sous la forme d'éléments constitutifs élastiques distincts, caractérisée par le fait que les pieds (2) de la machine (1) sont agencés de manière à être élastiques dans la direction verticale et dans la direction horizontale de telle sorte que les fréquences propres de translation et de basculement aussi bien du rotor que du stator (3) se situent à une distance, qui est nécessaire pour éviter des résonances, de fréquences d'excitation qui apparaissent.

2. Machine électrique suivant la revendication 1, caractérisée par le fait que les pieds (2) sont en forme de V et que les pointes (6) des pieds en forme de V sont disposées de manière à être dirigées perpendiculairement au plan médian de la machine (1), en direction du carter (3) du stator.

3. Machine électrique suivant la revendication 1 ou 2, caractérisée en ce que les pieds (2) sont fixés à l'aide de pièces intermédiaires (4) aussi bien au carter (3) du stator qu'à la fondation.

4. Machine électrique suivant la revendication 1, 2 ou 3, caractérisée en ce que des moyens de butée (5) sont prévus pour limiter la course verticale de débattement élastique.

5. Machine électrique suivant les revendications3 et 4, caractérisée par le fait que respectivement sur une pièce intermédiaire (4) faisant partie d'un pied (2) est prévue une barrette de butée (5), tournée vers l'autre pièce intermédiaire (4).

6. Machine électrique suivant l'une des revendications 1 à 4, caractérisée par le fait que la machine (1) est une machine à courant triphasé bipolaire.
